(19) Europäisches Patentamt
European Patent Office
Office européen des brevets

(11) EP 2 792 539 A2

(12) **EUROPEAN PATENT APPLICATION**

(43) Date of publication:
22.10.2014 Bulletin 2014/43

(51) Int Cl.:
*B60L 11/18* *(2006.01)*

(21) Application number: 14165063.0

(22) Date of filing: 17.04.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 19.04.2013 US 201361813970 P
07.04.2014 US 201414246538

(71) Applicant: Honda Motor Co., Ltd.
Tokyo 107-8556 (JP)

(72) Inventor: Uyeki, Robert M.
Raymond, OH 43067-9705 (US)

(74) Representative: Herzog, Markus
Weickmann & Weickmann
Patentanwälte
Postfach 86 08 20
81635 München (DE)

(54) **System and method for electric vehicle charging analysis and feedback**

(57) A computer-implemented method for electric vehicle charging analysis and feedback includes transmitting charge parameters from an electric vehicle to a remote server, wherein the charge parameters include at least an ignition status, position information, temporal charging information and a charging energy source type. The method includes receiving feedback from the remote server after the remote server analyzes the charge parameters and generates the feedback based on time of use rates and the charging energy source type, wherein the time of use rates are determined based on the position information and the temporal charging information.

FIG. 1

**Description**

RELATED APPLICATIONS

This application claims priority to U.S. Provisional Patent Application Ser. No. 61/813970, filed April 19, 2013, the content of which is incorporated by reference herein in its entirety.

BACKGROUND

Electric vehicles contain electric storage mechanisms (e.g., electric engines powered by rechargeable batteries) to store electricity and power the electric vehicle. The electric storage mechanisms can be replenished periodically by using, for example, charging equipment installed at a residential home or charging equipment installed at public or private charging stations. Charging behaviors including charging frequency, charging location, energy source type, electricity rates and pre and post charging driving, effect electric vehicle charging efficiency, cost and strategy.

Owners of electric vehicles are typically concerned about the environment and minimizing grid impact while balancing charging efficiency and cost. Further, some utility companies have implemented Time of Use (TOU) rates for electric vehicle charging to encourage off-peak charging thereby minimizing grid impact. Providing meaningful feedback about charging behaviors can help owners of electric vehicles minimize their carbon footprint in an economical and efficient manner.

BRIEF DESCRIPTION

According to one aspect, a computer-implemented method for electric vehicle charging analysis and feedback includes transmitting charge parameters from an electric vehicle to a remote server, wherein the charge parameters include at least an ignition status, position information, temporal charging information and a charging energy source type. The method includes receiving feedback from the remote server after the remote server analyzes the charge parameters and generates the feedback based on time of use rates and the charging energy source type, wherein the time of use rates are determined based on the position information and the temporal charging information.

According to another aspect, a computer-implemented method for electric vehicle charging analysis and feedback includes receiving, at a remote server including a processor, charge parameters from an electric vehicle and storing the charge parameters in a data store communicatively coupled to the processor, wherein the charge parameters include at least an ignition status, position information, temporal charging information and a charging energy source type. The method includes analyzing the charge parameters to generate feedback based on time of use rates and the charging energy source type, wherein the time of use rates are determined based on the position information and the temporal charging information. The method includes transmitting the feedback from the remote server to a vehicle computing device of the electric vehicle.

According to a further aspect, a system for electric vehicle charging analysis and feedback includes a remote server communicatively coupled to a data store. The system includes a vehicle computing device of an electric vehicle, wherein the vehicle computing device transmits charge parameters to the remote server, the charge parameters including at least an ignition status, position information, temporal charging information and a charging energy source type, wherein the remote server stores the charge parameters in the data store and analyzes the charge parameters to determine feedback based on time of use rates and the charging energy source type, wherein the time of use rates are determined based on the position information and the temporal charging information, and the remote server transmits the feedback to the vehicle computing device.

BRIEF DESCRIPTION OF THE DRAWINGS

FIG. 1 is a schematic view of an exemplary system for electric vehicle charging analysis and feedback according to an embodiment;
FIG. 2 is a schematic view of an exemplary electric vehicle architecture of the electric vehicle of FIG. 1 according to an embodiment;
FIG. 3 is a schematic view of an exemplary remote server architecture of the remote server of FIG. 1 according to an embodiment;
FIG. 4 is a flow chart of an exemplary method for electric vehicle charging analysis and feedback according to an embodiment;
FIG. 5 is a flow chart of an exemplary method for analyzing charge parameters of the method of FIG. 4 according to an embodiment;

FIG. 6 is a chart of exemplary user ratings according to an exemplary embodiment;

FIG. 7 is a flow chart of an exemplary method for electric vehicle charging analysis and feedback according to an embodiment; and

FIG. 8 is a flow chart of an exemplary method for transmitting charge parameters of the method of FIG. 7 according to an embodiment.

Although specific features of various implementations may be shown in some drawings and not in others, this is for convenience only. Any feature of any drawing may be referenced and/or claimed in combination with any feature of any other drawing.

DETAILED DESCRIPTION

The following includes definitions of selected terms employed herein. The definitions include various examples and/or forms of components that fall within the scope of a term and that can be used for implementation. The examples are not intended to be limiting.

A "bus", as used herein, refers to an interconnected architecture that is operably connected to other computer components inside a computer or between computers. The bus can transfer data between the computer components. The bus can be a memory bus, a memory controller, a peripheral bus, an external bus, a crossbar switch, and/or a local bus, among others. The bus can also be a vehicle bus that interconnects components inside a vehicle using protocols such as Controller Area network (CAN), Local Interconnect Network (LIN), among others.

"Computer communication", as used herein, refers to a communication between two or more computing devices (e.g., computer, personal digital assistant, cellular telephone, network device) and can be, for example, a network transfer, a file transfer, an applet transfer, an email, a hypertext transfer protocol (HTTP) transfer, and so on. A computer communication can occur across, for example, a wireless system (e.g., IEEE 802.11), an Ethernet system (e.g., IEEE 802.3), a token ring system (e.g., IEEE 802.5), a local area network (LAN), a wide area network (WAN), a point-to-point system, a circuit switching system, a packet switching system, among others.

A "computer-readable medium", as used herein, refers to a medium that provides signals, instructions and/or data. A computer-readable medium can take forms, including, but not limited to, non-volatile media and volatile media. Non-volatile media can include, for example, optical or magnetic disks, and so on. Volatile media can include, for example, semiconductor memories, dynamic memory, and so on. Common forms of a computer -readable medium include, but are not limited to, a floppy disk, a flexible disk, a hard disk, a magnetic tape, other magnetic medium, other optical medium, a RAM (random access memory), a ROM (read only memory), and other media from which a computer, a processor or other electronic device can read.

A "data store", as used herein can be, for example, a magnetic disk drive, a solid state disk drive, a floppy disk drive, a tape drive, a Zip drive, a flash memory card, and/or a memory stick. Furthermore, the disk can be a CD-ROM (compact disk ROM), a CD recordable drive (CD-R drive), a CD rewritable drive (CD-RW drive), and/or a digital video ROM drive (DVD ROM). The disk can store an operating system that controls or allocates resources of a computing device. The data store can also refer to a database, for example, a table, a set of tables, a set of data stores (e.g., a disk, a memory, a table, a file, a list, a queue, a heap, a register) and methods for accessing and/or manipulating those data in those tables and data stores. The data store can reside in one logical and/or physical entity and/or may be distributed between two or more logical and/or physical entities.

A "memory", as used herein can include volatile memory and/or non-volatile memory. Non-volatile memory can include, for example, ROM (read only memory), PROM (programmable read only memory), EPROM (erasable PROM), and EEPROM (electrically erasable PROM). Volatile memory can include, for example, RAM (random access memory), synchronous RAM (SRAM), dynamic RAM (DRAM), synchronous DRAM (SDRAM), double data rate SDRAM (DDR SDRAM), and direct RAM bus RAM (DRRAM). The memory can store an operating system that controls or allocates resources of a computing device.

An "operable connection", or a connection by which entities are "operably connected", is one in which signals, physical communications, and/or logical communications can be sent and/or received. An operable connection can include a physical interface, a data interface and/or an electrical interface.

A "processor", as used herein, processes signals and performs general computing and arithmetic functions. Signals processed by the processor can include digital signals, data signals, computer instructions, processor instructions, messages, a bit, a bit stream, or other means that can be received, transmitted and/or detected. Generally, the processor can be a variety of various processors including multiple single and multicore processors and co-processors and other multiple single and multicore processor and co-processor architectures. The processor can include various modules to execute various functions.

A "portable device", as used herein, is a computing device typically having a display screen with user input (e.g., touch, keyboard) and a processor for computing. Portable devices include, but are not limited to, handheld devices, mobile devices, smart phones, laptops, tablets and e-readers.

An "electric vehicle" (EV), as used herein, refers to any moving vehicle that is capable of carrying one or more human occupants and is powered entirely or partially by one or more electric motors powered by an electric battery. The EV can include battery electric vehicles (BEVs), plug-in hybrid electric vehicles (PHEVs) and extended range electric vehicles (EREVs). The term "vehicle" includes, but is not limited to: cars, trucks, vans, minivans, SUVs, motorcycles, scooters, boats, personal watercraft, and aircraft.

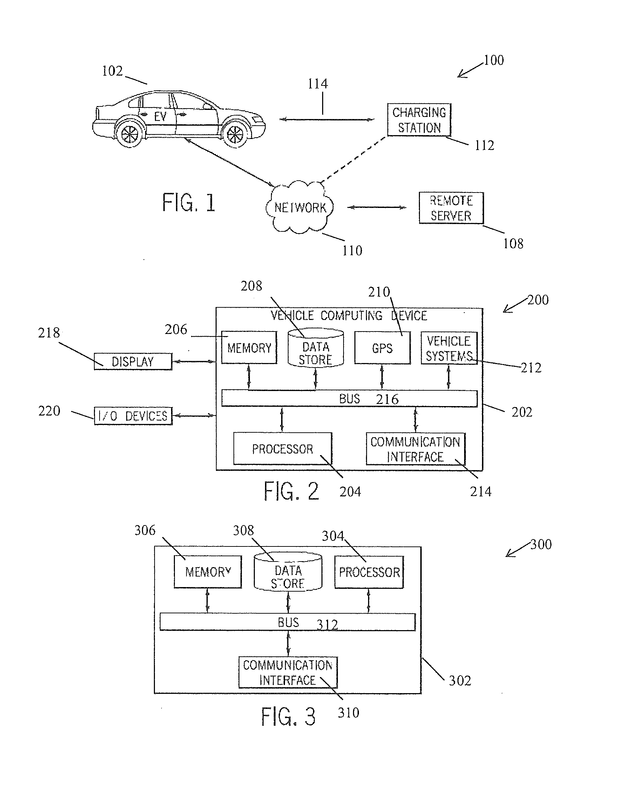

Referring now to the drawings, wherein the showings are for purposes of illustrating one or more exemplary embodiments and not for purposes of limiting the same, FIG. 1 is a high-level schematic view of an exemplary system 100 for electric vehicle charging analysis and feedback according to an embodiment. The components of the system 100, as well as the components of other systems and architectures discussed herein, can be combined, omitted or organized into different architectures for various embodiments. In the exemplary embodiment of FIG. 1, the system 100 includes an electric vehicle (EV) 102 powered by an electric motor 104 and an electric storage mechanism, for example, a battery 106. In one embodiment, the EV 102 is purely electric in that it only has the electric motor 104. In other embodiments, the EV 102 may have an electric motor and internal combustion engine (not shown). In some embodiments, the EV 102 may have any number of electric motors and/or internal combustion engines and they may operate in series (e.g., as in an extended range electric vehicle), in parallel, or some combination of series and parallel operation.

The EV 102 is operatively connected for computer communication to a remote server 108 via a wireless communication network 110. The EV 102 can transmit and receive data (e.g., charge parameters, charging data and feedback, vehicle system data) to and from the remote server 108, and vice versa, via the network 110. The remote server 108 can be a remote server or a device remote (e.g., off-board) from the EV 102. The system architectures of the EV 102 and the remote server 108 will be discussed in more detail herein with reference to FIGS. 2 and 3.

Further, in the exemplary embodiment of FIG. 1, the system 100 can include a charging station 112 that can connect to the EV 102 via a charging link 114. The charging link 114 can be a wired or wireless link to the charging station 112. The charging station 112 can replenish one or more electric storage mechanism (e.g., the battery 106) of the EV 102. Additionally, in some embodiments, the charging station 112 is operably connected for computer communication with the EV 102, for example, to transmit and receive data (e.g., charge parameters, charging data and feedback, vehicle system data) to and from the EV 102. Computer communication can occur also via the charging link 114 and/or a wired or wireless communication link. The charging station 112 includes charging equipment and can be installed at a residential home or outside a residential home , for example, at a public (e.g., non-networked) or private (e.g., networked) charging station. The charging station replenishes the electric storage mechanism (e.g., battery) using a charging energy source type that indicates the type of energy the charging station provides. Energy can include clean renewable energy and non-renewable energy. Clean renewable energy includes, solar energy, hydro energy, biomass energy, windy energy, among others. Non-renewable energy includes electricity from a grid source, and in the case of hybrid vehicles, fossil fuels. In some embodiments, the charging station 112 can also be operatively connected for computer communication to the remote server 108, for example, via the network 110.

Referring now to FIG. 2, a schematic view of an exemplary electric vehicle architecture 200, for example the EV 102 of FIG. 1, is shown according to an exemplary embodiment. In particular, the EV 102 can include a vehicle computing device 202 (e.g., a telematics unit, an electronic control unit) with provisions for processing, communicating and interacting with various components of the EV 102 and other components of the system 100. The vehicle computing device 202 includes a processor 204, a memory 206, a data store 208, a position determination device 210 (e.g., a GPS, a navigation unit), a plurality of vehicle systems 212 (e.g., including the electric motor 104, the batter 106) and a communication interface 214. The components of the architecture 200, including the vehicle computing device 202, can be operably connected for computer communication via a bus 216 (e.g., a Controller Area Network (CAN) or a Local Interconnect Network (LIN) protocol bus) and/or other wired and wireless technologies. The vehicle computing device 102 as well as the EV 102 can include other components and systems not shown.

The processor 204 and/or the memory 206 can include various modules and/or logic to facilitate electric vehicle charging analysis and feedback as described herein. Further, as will be described herein, the data store 208 can stored charge data (e.g., charge parameters) for electric vehicle charging analysis and feedback. The communication interface 214 provides software, firmware and/or hardware to facilitate data input and output between the components of the vehicle computing device 102 and other components, networks and data sources. Further, the communication interface 214 can facilitate communication with a display 218 (e.g., a head unit, a display stack, a heads-up display) in the vehicle 102 and other input/output devices 220, for example, a portable device (not shown) connected to the vehicle 102. In some embodiments the portable device, can include some or all of the components and functionality of the vehicle computing device 102.

Referring now to FIG. 3, a schematic view of an exemplary remote server architecture 300, for example the remote server 108 of FIG. 1, is shown according to an embodiment. The remote server 108, is located remotely (i.e., off-board) from the EV 102 (FIG. 1) and, in some embodiments can be maintained by an Original Equipment Manufacturer (e.g., of the EV 102), a utility company, a regulatory body, among others. Additionally, in some embodiments, the remote server 108 can be another type of remote device or supported by a cloud architecture. In FIG. 3, the remote server 108 includes a computing device 302 with a processor 304, a memory 306, a data store 308 and a communication interface 310. The components of the architecture 300, including the computing device 302, can be operably connected for computer communication via a bus 312 and/or other wired and wireless technologies. The computing device 302 as well as the remote server 108 can include other components and systems not shown.

The processor 304 and/or the memory 306 can include various modules and logic to facilitate electric vehicle charging analysis and feedback as described herein. Further, as will be described herein, the data store 308 can stored charge data (e.g., charge parameters) for electric vehicle charging analysis and feedback. The communication interface 310 provides software, firmware and/or hardware to facilitate data input and output between the components of the computing device 302 and other components, networks and data sources.

An exemplary system for electric vehicle charging analysis and feedback in operation will now be described with reference to FIGS. 1-3. In one embodiment, a system for electric vehicle charging analysis and feedback includes a remote server communicatively coupled to a data store. For example, the remote server 108 is communicatively coupled to the data store 308. The system also includes a vehicle computing device of an electric vehicle. For example, the vehicle computing device 202 of the EV 102. The vehicle computing device transmits charge parameters to the remote server. For example, the processor 204 and/or the memory 206 can include and execute instructions for transmitting charge parameters obtained or accessed, from for example, the plurality of vehicle systems 212 (e.g., the electric motor 104, the battery 106), the position determination device 210, other components of the vehicle computing device 202 and/or from the charging station 112 via the charging link 114, to the remote server 108,

Charge parameters can include, but are not limited to, data related to the components and systems of the EV 102 as well as data related to the recharging of the battery 106 and the charging station 112. Specifically, charge parameters can include, but are not limited to, ignition status (e.g., ON/OFF), position information (e.g., a current position, a previous position, a future destination/point of interest, from, for example, the position determination device 210), temporal charging information (e.g., a charge start time/date, a charge end time/date), a charging energy source type (e.g., renewable or nonrenewable charging energy source type of a charging station), a utility area, a time of use (TOU) rate, a charge amount, a current state of charge (SOC), a SOC at the charge start time, a SOC at the charge end time, a battery type, a charger type, charger timer usage, an ignition ON time, an ignition OFF time, among others.

The charge parameters can be transmitted from the EV 102 to the remote server 108 at predetermined time intervals or upon a predetermined event. For example, charge parameters can be sent upon detection of an ignition ON signal, an ignition OFF signal or an ignition ON/OFF cycle. In another example, the charge parameters can be sent upon connecting or disconnecting the charging link 114 from the EV 102 (i.e., indicating a start or stop charging event).

Further, in one embodiment, transmitting the charge parameters from the vehicle computing device to the remote server is based on a connection status between the vehicle computing device and the remote sever. For example, the connection status can be determined by the communication interface 214 of the vehicle computing device 202. If the communication interface 214 cannot establish a connection with the network 110 and/or the communication interface 310 of the remote server 108, or if a connection is established, but is weak or intermittent, the vehicle computing device 202 can store the charge parameters on-board at, for example, the data store 208. In one embodiment, upon detecting that the connection status is equal to or below a predetermined threshold, the vehicle computing device stores the charge parameters at a data store on-board the electric vehicle. For example, if the connection status is weak and falls below a predetermined threshold, the vehicle computing device 202 stores the charge parameters at the data store 208 on-board the EV 102.

The stored charge parameters can be stored on-board for a predetermined time or until a connection can be established with the remote server 108. Specifically, the stored charge parameters are stored until the next attempt for vehicle data transmission and remains stored until successful transmission is completed (e.g., as indicated by receipt of data confirmation from the remote server 108). Thus, if there are communication issues (e.g., signal strength is weak, no signal, intermittent signal) between the EV 102 and the remote server 108, the charge parameters can remain on-board until the issues are resolved. For example, upon detecting that the connection status is above the predetermined threshold, the vehicle computing device 202 can transmit the stored charge parameters from the data store 208 to the remote server 108. In one embodiment, upon receiving a data confirmation from the remote server 108 indicating that the charge parameters were received, the vehicle computing device 202 can delete the stored charge parameters from the data store 208 on-board the EV 102.

The remote server stores the charge parameters, received from the vehicle computing device, in a data store communicatively coupled to the remote server. For example, the data store 308 communicatively coupled to the remote server 108 can store the charge parameters. The remote server 108 can send a data confirmation to the vehicle computing device 202 indicating the charge parameters were received. When the charge parameters are received at the remote sever 108, in some embodiments, the charge parameters are stored in the data store 308 with associated identification information that can include a vehicle ID of the EV 102 and/or a user ID of a driver of the EV 102. In one embodiment, upon detecting that a data confirmation from the remote server is not received in response to transmitting the charge parameters, the vehicle computing device 202 can store the charge parameters at the data store 208 on-board the EV 102. As discussed above, the stored charge parameters can be stored on-board for a predetermined time or until a connection can be established with the remote server 108 and/or a data confirmation is received from the remote server 108.

The remote server analyzes the charge parameters to determine and generate feedback. Specifically, the remote server can determine the feedback based on at least time of use rates and a charging energy source type. Time of use (TOU) rates is a pricing strategy where a utility company provides electricity pricing based on the time-of-day and/or the location the electricity is provided or the electricity is delivered. TOU rates can be fixed based on the time-of-day and/or the location or TOU rates can be dynamic based on a current supply-demand situation (e.g., grid load). Most utility companies provide lower TOU rates during off-peak hours than on-peak hours. Some TOU rates have more than one tier, for example, on-peak, off-peak, super off-peak, night and weekend, residential. TOU rates encourage usage during off-peak hours, which can lead to a more balanced grid load.

In one embodiment, TOU rates can be determined and/or received by the EV 102 and transmitted as a charge parameter to the remote device 108. For example, the charging station 112 can provide TOU rates to the EV 102 when the EV 102 is connected to the charging station 112. In another embodiment, TOU rates are determined by the remote server 108 and are based on position information of the EV 102 and temporal charging information received from the vehicle computing device 202. For example, the remote server 108 can determine a utility area based on the position information of the EV 102 and/or charging station information (e.g., position, ID, type of charging station). Based on the utility service area and the temporal information (e.g., charging start/stop times), the remote server 108 can determine a TOU rate and determine whether the user is charging during an on-peak or off-peak time. In another example, the remote server 104 can determine the peak or off-peak time, pricing and potential savings based on a current vehicle position, a charge start time/date, a charge end time/date and a charge amount. In another embodiment, the remote server 108 can be configured to download TOU rates via the wireless communication network 110 from, for example a utility provider, to calculate pricing and potential savings. Exemplary pricing and savings calculations are discussed in further detail below.

A charging energy source type indicates the type of energy used to charge the electric vehicle or the type of energy available to charge the electric vehicle. Energy can include clean renewable energy and non-renewable energy. Clean renewable energy includes, solar energy, hydro energy, biomass energy, windy energy, among others. Non-renewable energy includes electricity from a grid source, and in the case of hybrid vehicles, fossil fuels. The charging energy source type can also include a level, for example, in the case of electricity from a grid, electricity can be obtained from a standard charger (e.g., 120 volt) or a faster charger (e.g., 240 volt).

In one embodiment, the remote server determines the feedback by calculating an energy and cost savings based on the charge parameters. In one embodiment, upon determining that the ignition status is OFF, the remote server 108 (e.g., via the processor 304 and/or memory 306) calculates an energy and cost savings and generates feedback based on the energy and cost savings. In a further embodiment, the remote server 108 calculates a minimum state of charge (e.g., of the battery 106) for a future trip (e.g., determined from the positioning determination device 210), and an energy and cost savings, upon determining that the ignition status is ON (e.g., the EV is running, for example, the vehicle has been charged and the driver is driving).

In another embodiment, the remote server 108 can generate feedback based on identifying a charging pattern based on analyzing the charge parameters. A charging pattern is one or more occurrences of an event related to the charging process as indicated by the vehicle data. The charging pattern can indicate a charging behavior. Identifying the charging pattern can include comparing the charge parameters to a set of predetermined charging patterns. Exemplary charging patterns will now be discussed. Other charging patterns can be identified and other charge parameters can be used to identify a charging pattern. In one example, the charging pattern can indicate on-peak or off-peak time charging. In another example, the charging pattern can indicate whether the EV is driven immediately after charging (e.g., based on a charging start/stop time, an ignition on/off time). In a further example, the charging pattern can indicate a charging energy source type available and a charging energy source type used for charging. The charging pattern can be identified for particular periods of time, for example, for a day, week, a month and so on.

The remote server can also transmit the feedback to the vehicle computing device or a device (e.g., portable device) associated with the EV or the driver of the EV. For example, the remote server 108 can transmit the feedback to the vehicle computing device 202 and the communication interface 214 can output the feedback to, for example, the display 216 and/or the I/O devices 218 (e.g., a portable device).

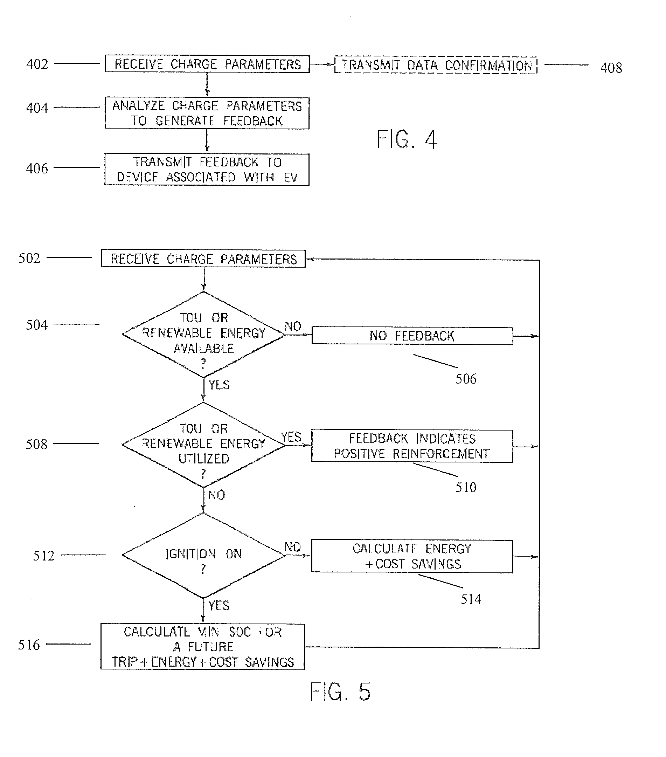

Referring now to FIG. 4, an exemplary method for electric vehicle charging analysis and feedback according to an exemplary embodiment is illustrated. The method of FIG. 4 illustrates a server side (i.e., the remote server 108) processing for electric vehicle charging analysis and feedback. However, the method of FIG. 4 could also be performed at the vehicle computing device 202 at the EV 102. The method of FIG. 4 will be discussed in association with the system 100 and FIGS. 1-3, however the method could also be used with other systems. At block 402, the method includes receiving, at a remote server including a processor, charge parameters from an electric vehicle and storing the charge parameters in a data store communicatively coupled to the processor. For example, the remote server 108 can store the charge parameters at the data store 308. The remote server 108 can store the charge parameters over a period of time.

In some embodiments, the charge parameters can be transmitted from the EV 102 to the remote server 108 at predetermine intervals or upon a predetermined event. For example, charge parameters can be sent upon detection of an ignition ON signal, an ignition OFF signal or an ignition ON/OFF cycle. In another example, the vehicle data can be sent upon connecting or disconnecting the charging link 114 from the EV 102 (i.e., indicating a start or stop charging event). When the charge parameters are received at the remote sever 108, in some embodiments, the charge parameters are stored in the data store 308 with associated identification information that can include a vehicle ID of the EV 102 and/or a user ID of a driver of the EV 102. In one embodiment, after receiving and storing the charge parameters, at block 408, the remote server can transmit a data confirmation to the vehicle computing device.

As discussed above, the charge parameters can include, but are not limited to, data related to the components and systems of the EV 102 as well as data related to the recharging of the battery 106 and the charging station 112. In one embodiment, the charge parameters include at least an ignition status, position information, temporal charging information and a charging energy source type.

At block 404, the method includes analyzing the charge parameters to generate feedback. The feedback is based on time of use (TOU) rates and the charging energy source type. The TOU rates are determined based on the position information and the temporal charging information. As discussed above, in one embodiment, TOU rates can be determined and/or received by the EV 102 and transmitted as a charge parameter to the remote device 108. For example, the charging station 112 can provide TOU rates to the EV 102 when the EV 102 is connected to the charging station 112. In another embodiment, TOU rates are determined by the remote server 108 and are based on position information of the EV 102 and temporal charging information received from the vehicle computing device 202. For example, the remote server 108 can determine a utility area based on the position information of the EV 102 and/or charging station information (e.g., position, ID, type of charging station). Based on the utility service area and the temporal information (e.g., charging start/stop times), the remote server 108 can determine a TOU rate and determine whether the user is charging during an on-peak or off-peak time. In another example, the remote server 104 can determine the peak or off-peak time, pricing and potential savings based on a current vehicle position, a charge start time/date, a charge end time/date and a charge amount. In another embodiment, the remote server 108 can be configured to download TOU rates via the wireless communication network 110 from, for example a utility provider, to calculate pricing and potential savings

FIG. 5 is a flow chart of an exemplary method for analyzing charge parameters of the method of FIG. 4 according to an embodiment. At block 502, the method includes receiving charge parameters, as discussed above. At block 504, the method includes determining whether TOU rates or a renewable energy charging energy source is available. The TOU rates, are determined, as discussed above based on the positional information of the EV and the temporal charging information. To determine if a renewable energy charging source is available, it is determined if the charging energy source type is a renewable energy charging source. In another embodiment, determining if a renewable energy charging source is available is based on the positional information of the EV (e.g., is a charging station nearby the EV that provides a renewable energy charging source). If TOU rates or a renewable energy charging source is not available, at block 506, no feedback is generated.

However, if TOU rates or a renewable energy charging source is available, it is determined at block 508 whether the TOU rates or the renewable energy charging source has been utilized. If YES, the remote server 108 generates feedback with positive reinforcement at block 510. If NO, it is determined whether the ignition status is ON at block 512. If the ignition status is OFF, at block 514, the method includes calculating an energy and cost savings based on the charge parameters. Algorithm (a) illustrates an exemplary calculation of an energy and cost savings based on the charge parameters, specifically, energy use per kilowatt hour (kWh).

$$\text{(a)} \ (\text{SOC at the charge end time} - \text{SOC at the charge start time}) * (\text{battery energy (kWh)}) = \text{Energy Use (kWh)}$$

With reference to the EV 102 of FIG. 1, an example will now be described using algorithm (a). The charge parameters received by the remote server 108 can indicate that the battery 106 includes a 25 kw-hr battery pack, the start SOC of the battery 106 is 25% and the end SOC of the battery 106 is 100%. Therefore, energy use is 18.75 kWh. The remote server 108 can determine based on the charge parameter that this type of charge was conducted three times a week in a utility service area A. The TOU rates for the utility service area A can be provided to the remote server 108 via the EV 102 or the TOU rates can be determined by the remote server 108 as discussed above. The appropriate TOU rates are applied to the energy use amount to determine an energy and cost savings as seen in Table 1 below. The savings can be calculated and generated as feedback to encourage economical charging.

Table 1

| Time | Rate | Per charge | Per week | Per month |
|------|------|-----------|----------|-----------|
| Super off-peak | $0.16/kwh | $3.00 | $9.00 | $36.00 |
| Peak charge | $0.55 | $10.31 | $30.93 | $123.75 |

Referring again to FIG. 5, at block 512, if it is determined that the ignition status is ON, at block 516 the method includes generating feedback by calculating a minimum state of charge for a future trip and calculating an energy and cost savings based on the minimum state of charge and the charge parameters. The charge parameters received from the vehicle computing device 202 can include position information, including future points of interests and/or destinations. The remote server 108 can determine a minimum state of charge of the battery 106 for the future trip and can calculate an energy and cost savings for utilizing TOU rates and/or a renewable energy charging source based on the minimum state of charge.

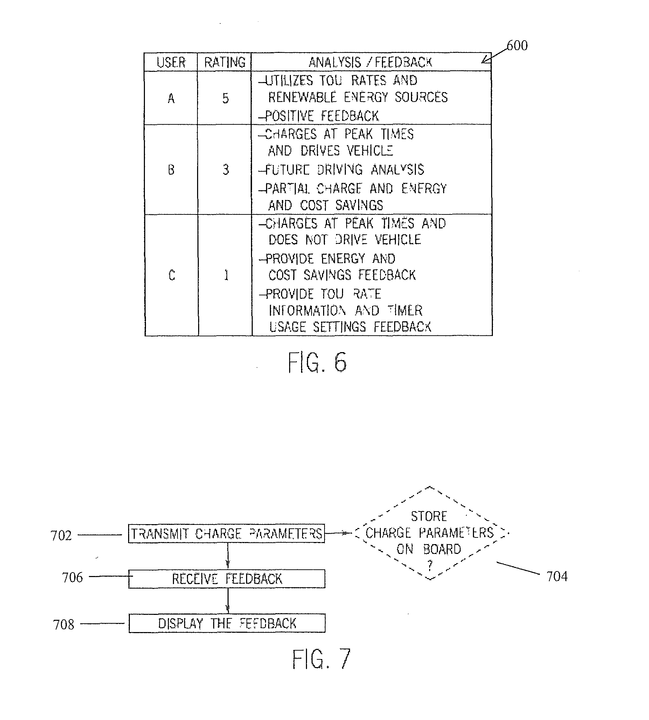

In one embodiment, analyzing the charge parameters to generate feedback includes associating a rating with the user based on the charge parameters. FIG. 6 is an exemplary table of user ratings and analysis and feedback based on the rating. A rating can be a status, such as "good," "fair," or "poor." In other embodiments, the rating can be based on a numeric scale, as shown in FIG. 6. A rating of "good" (e.g., a rating 5) can indicate economical and efficient charging behavior. For example, user A charges mostly during super off-peak hours and uses renewable energy for charging. A rating of "fair" (e.g., a rating 3) can indicate somewhat economical and efficient charging behavior. For example, user B charges at peak times, but drives (i.e., ignition ON) immediately after charging. A rating of "poor" (e.g., a rating 1) can indicate uneconomical and inefficient charging behavior. For example, user B charges at peak times and does not drive the car (i.e., ignition OFF) immediately after charging. The feedback can include a user rating. Further in other embodiments, the feedback can include recommendations based on the user rating. For example, for a rating of "poor" (e.g., a rating 1), the feedback can include a recommendation to use a charging timer and/or can provide information (e.g., from a manual, an OEM website) about efficient charging.

Referring again to FIG. 4, at block 406 the method includes transmitting the feedback from the remote server to a vehicle computing device of the electric vehicle. The remote server can also transmit the feedback to the vehicle computing device or a device (e.g., portable device) associated with the EV or the driver of the EV. For example, the remote server 108 can transmit the feedback to the vehicle computing device 202 and the communication interface 214 can output the feedback to, for example, the display 216 and/or the I/O devices 218 (e.g., a portable device).

Referring now to FIG. 7, an exemplary method for electric vehicle charging analysis and feedback according to an exemplary embodiment is illustrated. The method of FIG. 7 illustrates a client side (i.e., the EV 102) processing for electric vehicle charging analysis and feedback. The method of FIG. 7 will be discussed in association with the system 100 and FIGS. 1-3, however the method could also be used with other systems.

At block 702, the method includes transmitting charge parameters from an electric vehicle to a remote server. For example, the vehicle computing device 202, utilizing instructions stored and executed by the processor 206 and/or the memory 206, can transmit charge parameters via the communication interface 214 to the remote server 108. As discussed above, charge parameters can include, but are not limited to, data related to the components and systems of the EV 102 as well as data related to the recharging of the battery 106 and the charging station 112. In one embodiment, the charge parameters include at least an ignition status, position information, temporal charging information and a charging energy source type.

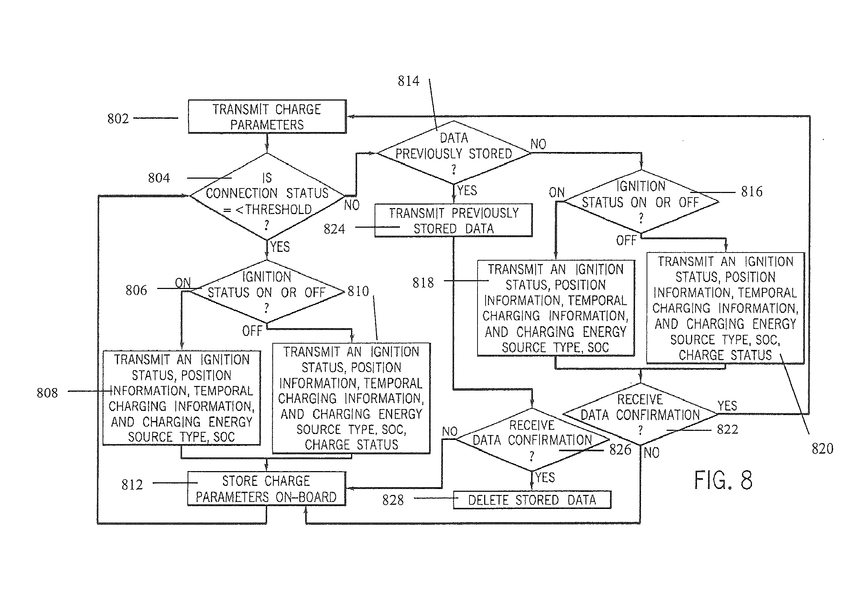

At block 702, it can be determined whether to store charge parameters on-board the electric vehicle. In some embodiments, transmitting the charge parameters from the electric vehicle to the remote server is based on a connection status between the electric vehicle and the remote server. FIG. 8 is a flow chart of an exemplary method for transmitting charge parameters of the method of FIG. 7 according to an embodiment. At block 804, it is determined whether the connection status is equal to or less that a predetermined threshold. If yes, the vehicle computing device stores the charge parameters at a data store on-board the electric vehicle. For example, if the connection status is weak and falls below a predetermine threshold, the vehicle computing device 202 stores the charge parameters at the data store 208 on-board the EV 102.

More specifically, if the connection status is equal to or less that a predetermined threshold, it is determined at block 806, whether the ignition status is ON or OFF. If the ignition status is ON, at block 808, charge parameters include at least an ignition status, position information, temporal charging information, a charging energy source type and a battery state of charge. If the ignition status is OFF, the charge parameters also include a charge status of the battery. At block 812, the charge parameters are stored on-board the EV.

The stored charge parameters can be stored on-board for a predetermined time or until a connection can be established with the remote server 108. Specifically, the stored charge parameters are stored until the next attempt for

8

vehicle data transmission and remains stored until successful transmission is completed (e.g., as indicated by receipt of data confirmation from the remote server 108). Accordingly, at the next attempt for vehicle data transmission (e.g., block 804), it is again determined whether the connection status is equal to or below a predetermined threshold. If no, it is determined at block 814 whether data has been previously stored. For example, the processor 204 can determine if the data store 208 includes previously stored charge parameters. If not, at block 816, it is determined whether the ignition status is ON or OFF. If the ignition status is ON, at block 818, the vehicle computing device transmits charge parameters to the remote server including at least an ignition status, position information, temporal charging information, a charging energy source type and a battery state of charge. If the ignition status is OFF, the charge parameters also include a charge status of the battery as shown at block 820. At block 822, it is determined if a data confirmation has been received at the vehicle computing device from the remote server. If yes, the method ends until the next transmission of charge parameters. If no, the charge parameters are stored on-board the EV at block 812.

Returning to block 814, if it is determined that data has been previously stored on-board the EV, at block 824, the previously stored data is transmitted to the remote server. At block 826, it is determined if a data confirmation has been received at the vehicle computing device from the remote server. If yes, at block 828, the previously stored data is deleted from the EV. If no, the charge parameters are again stored (e.g., with updated charge parameters) or maintained on-board the EV at block 812.

Referring again to FIG. 7, the method includes at block 706 receiving feedback from the remote server after the remote server analyzes the charge parameters and generates the feedback. The feedback is based on time of use rates and the charging energy source type, wherein the time of use rates are determined based on the position information and the temporal charging information. In some embodiments, the method can also include at block 708, displaying the feedback. For example, after receiving the feedback from the remote server 108, the feedback can be output by communication interface 214 to, for example, the display 216 and/or the I/O devices 218 (e.g., a portable device).

The embodiments discussed herein can also be described and implemented in the context of computer-readable storage medium storing computer executable instructions. Computer-readable storage media includes computer storage media and communication media. For example, flash memory drives, digital versatile discs (DVDs), compact discs (CDs), floppy disks, and tape cassettes. Computer-readable storage media can include volatile and nonvolatile, removable and non-removable media implemented in any method or technology for storage of information such as computer readable instructions, data structures, modules or other data. Computer-readable storage media excludes non-transitory tangible media and propagated data signals.

It will be appreciated that various implementations of the above-disclosed and other features and functions, or alternatives or varieties thereof, may be desirably combined into many other different systems or applications. Also that various presently unforeseen or unanticipated alternatives, modifications, variations or improvements therein may be subsequently made by those skilled in the art which are also intended to be encompassed by the following claims.

A computer-implemented method for electric vehicle charging analysis and feedback includes transmitting charge parameters from an electric vehicle to a remote server, wherein the charge parameters include at least an ignition status, position information, temporal charging information and a charging energy source type. The method includes receiving feedback from the remote server after the remote server analyzes the charge parameters and generates the feedback based on time of use rates and the charging energy source type, wherein the time of use rates are determined based on the position information and the temporal charging information.

## Claims

1. A computer-implemented method for electric vehicle charging analysis and feedback, comprising:

   transmitting charge parameters from an electric vehicle to a remote server, wherein the charge parameters include at least an ignition status, position information, temporal charging information and a charging energy source type; and
   receiving feedback from the remote server after the remote server analyzes the charge parameters and generates the feedback based on time of use rates and the charging energy source type, wherein the time of use rates are determined based on the position information and the temporal charging information.

2. The computer-implemented method of claim 1, wherein transmitting the charge parameters from the electric vehicle to the remote server is based on a connection status between the electric vehicle and the remote server.

3. The computer-implemented method of claim 1 or 2, wherein upon detecting the connection status is equal to or below a predetermined threshold, storing the charge parameters at a data store on-board the electric vehicle.

4. The computer-implemented method of any of claims 1 to 3, wherein upon detecting that the connection status is above the predetermined threshold, transmitting the stored charge parameters from the data store on-board the electric vehicle to the remote server,
and, preferably, wherein upon receiving a data confirmation from the remote server, deleting the stored charge parameters from the data store on-board the electric vehicle.

5. The computer-implemented method of any of claims 1 to 4, wherein upon detecting that a data confirmation from the remote server is not received in response to transmitting the charge parameters, storing the charge parameters at a data store on-board the electric vehicle.

6. The computer-implemented method of any of claims 1 to 5, wherein transmitting the charge parameters includes transmitting a battery charge status upon detecting the ignition status is OFF.

7. A computer-implemented method for electric vehicle charging analysis and feedback, comprising:

   receiving, at a remote server including a processor, charge parameters from an electric vehicle and storing the charge parameters in a data store communicatively coupled to the processor, wherein the charge parameters include at least an ignition status, position information, temporal charging information and a charging energy source type;
   analyzing the charge parameters to generate feedback based on time of use rates and the charging energy source type, wherein the time of use rates are determined based on the position information and the temporal charging information; and
   transmitting the feedback from the remote server to a vehicle computing device of the electric vehicle.

8. The computer-implemented method of claim 7, wherein analyzing the charge parameters includes at least one of:

   • upon determining time of use rates are available and utilized, generating feedback indicating positive reinforcement;
   • upon determining that the charging energy source type is a renewable charging energy source, generating feedback indicating positive reinforcement;
   • upon determining that at least one of the time of use rates or a renewable charging energy source are available and not utilized, generating feedback based on the ignition status of the vehicle; and
   • assigning a user rating based on the charge parameters.

9. The computer-implemented method of claim 8, wherein upon determining that the ignition status is OFF, generating feedback includes calculating an energy and cost savings based on the charge parameters.

10. The computer-implemented method of claim 8 or 9, wherein upon determining that the ignition status is ON, generating feedback includes calculating a minimum state of charge for a future trip and calculating an energy and cost savings based on the minimum state of charge and the charge parameters.

11. A system for electric vehicle charging analysis and feedback, comprising:

   a remote server communicatively coupled to a data store; and
   a vehicle computing device of an electric vehicle, wherein the vehicle computing device transmits charge parameters to the remote server, the charge parameters including at least an ignition status, position information, temporal charging information and a charging energy source type, wherein the remote server stores the charge parameters in the data store and analyzes the charge parameters to determine feedback based on time of use rates and the charging energy source type, wherein the time of use rates are determined based on the position information and the temporal charging information, and the remote server transmits the feedback to the vehicle computing device.

12. The system of claim 11, wherein the vehicle computing device transmits the charge parameters from the vehicle computing device to the remote server based on a connection status between the vehicle computing device and the remote server, wherein the vehicle computing device stores the charge parameters upon detecting that the connection status is equal to or below a predetermined threshold,
and, preferably, wherein the vehicle computing device transmits the stored charge parameters to the remote server upon detecting that the connection status is above the predetermined threshold and upon receiving a data confirmation from the remote server, the vehicle computing device deletes the stored charge parameters from the data store on-board the electric vehicle.

13. The system of claim 11 or 12, wherein the vehicle computing device stores the charge parameters at a data store on-board the electric vehicle upon detecting that a data confirmation from the remote server is not received in response to transmitting the charge parameters.

14. The system of any of claims 11 to 13, wherein the remote server determines the feedback by calculating energy and cost savings based on the charge parameter upon determining the ignition status is OFF.

15. The system of any of claims 11 to 14, wherein the remote server determines the feedback by calculating a minimum state of charge for a future trip and calculating an energy and cost savings based on the minimum state of charge and the charge parameters, upon determining the ignition status is ON.

FIG. 1

CHARGING STATION — 112

102

EV

114

100

NETWORK — 110

REMOTE SERVER — 108

FIG. 2

208    210    200

VEHICLE COMPUTING DEVICE

218    206

DISPLAY    MEMORY    DATA STORE    GPS    VEHICLE SYSTEMS — 212

BUS    216 — 202

220    I/O DEVICES

PROCESSOR    COMMUNICATION INTERFACE

204    214

FIG. 3

306    308    304    300

MEMORY    DATA STORE    PROCESSOR

BUS    312

302

COMMUNICATION INTERFACE

310

402 — RECEIVE CHARGE PARAMETERS → TRANSMIT DATA CONFIRMATION — 408

404 — ANALYZE CHARGE PARAMETERS TO GENERATE FEEDBACK

FIG. 4

406 — TRANSMIT FEEDBACK TO DEVICE ASSOCIATED WITH EV

502 — RECEIVE CHARGE PARAMETERS

504 — TOU OR RENEWABLE ENERGY AVAILABLE ? — NO → NO FEEDBACK

506

YES

508 — TOU OR RENEWABLE ENERGY UTILIZED ? — YES → FEEDBACK INDICATES POSITIVE REINFORCEMENT

510

NO

512 — IGNITION ON ? — NO → CALCULATE ENERGY + COST SAVINGS

514

YES

516 — CALCULATE MIN SOC FOR A FUTURE TRIP + ENERGY + COST SAVINGS

FIG. 5

| USER | RATING | ANALYSIS / FEEDBACK |
|------|--------|---------------------|
| A | 5 | –UTILIZES TOU RATES AND RENEWABLE ENERGY SOURCES<br>–POSITIVE FEEDBACK |
| B | 3 | –CHARGES AT PEAK TIMES AND DRIVES VEHICLE<br>–FUTURE DRIVING ANALYSIS<br>–PARTIAL CHARGE AND ENERGY AND COST SAVINGS |
| C | 1 | –CHARGES AT PEAK TIMES AND DOES NOT DRIVE VEHICLE<br>–PROVIDE ENERGY AND COST SAVINGS FEEDBACK<br>–PROVIDE TOU RATE INFORMATION AND TIMER USAGE SETTINGS FEEDBACK |

600

FIG. 6

702 — TRANSMIT CHARGE PARAMETERS → STORE CHARGE PARAMETERS ON BOARD ? — 704

706 — RECEIVE FEEDBACK

708 — DISPLAY THE FEEDBACK

FIG. 7

FIG. 8

802 — TRANSMIT CHARGE PARAMETERS

804 — IS CONNECTION STATUS = <THRESHOLD ?

806 — IGNITION STATUS ON OR OFF ?

808 — TRANSMIT AN IGNITION STATUS, POSITION INFORMATION, TEMPORAL CHARGING INFORMATION, AND CHARGING ENERGY SOURCE TYPE, SOC

810 — TRANSMIT AN IGNITION STATUS, POSITION INFORMATION, TEMPORAL CHARGING INFORMATION, AND CHARGING ENERGY SOURCE TYPE, SOC, CHARGE STATUS

812 — STORE CHARGE PARAMETERS ON-BOARD

814 — DATA PREVIOUSLY STORED ?

816 — IGNITION STATUS ON OR OFF ?

818 — TRANSMIT PREVIOUSLY STORED DATA

820 — TRANSMIT AN IGNITION STATUS, POSITION INFORMATION, TEMPORAL CHARGING INFORMATION, AND CHARGING ENERGY SOURCE TYPE, SOC, CHARGE STATUS

TRANSMIT AN IGNITION STATUS, POSITION INFORMATION, TEMPORAL CHARGING INFORMATION, AND CHARGING ENERGY SOURCE TYPE, SOC

822 — RECEIVE DATA CONFIRMATION ?

824 — NO / YES

826 — RECEIVE DATA CONFIRMATION ?

828 — DELETE STORED DATA

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61813970 A